# EUROPEAN PATENT APPLICATION

(11) **EP 1 475 554 A1**
(43) Date of publication of application: **10.11.2004**
(21) Application number: 03425289.0
(22) Date of filing: 06.05.2003
(51) Int. Cl.: F16H 25/22

(54) **Ball screw**

(71) Applicant: Umbra Cuscinetti S.p.A., 06034 Foligno (IT)
(72) Inventor: Perni, Federico, 06039 Foligno (IT); Pizzoini, Luciano, 06034 Foligno (IT); Porzi, Carlo, 06034 Foligno (IT)
(74) Representative: Cerbaro, Elena

(57) **Abstract**

In a ball screw, a nut (6) is mounted coaxially with a shaft (2) having a single external thread (5), and has at least one track (9), which is engaged by a train (10) of balls (11), extends endlessly about a longitudinal axis (3) of the screw, and is defined by a first portion (12) oriented the same way as the external thread (5) and of a first depth, and by a second portion (13) of a second depth greater than the first depth; each track (9) being formed entirely and directly on the nut (6) and in one piece with the nut (6).

## Description

The present invention relates to a ball screw.

More specifically, the present invention relates to a ball screw of the type comprising a shaft having a given longitudinal axis and a single external thread; and a nut fitted coaxially with the shaft, formed in one piece, and bounded internally by a substantially cylindrical surface.

The nut normally has at least one track, which extends along an endless path about said axis, opens outwards at said surface, and is engaged by a train of balls. The track comprises a first portion oriented the same way as the external thread and of a first depth measured crosswise to said path; and a second portion of a second depth, also measured crosswise to the path, greater than the first depth to allow the balls to release the external thread of the shaft.

The second portion is normally defined by a diverting element housed inside a seat formed radially through the nut.

Known ball screws of the above type have several drawbacks, mainly due to the seat reducing the rigidity and structural resistance of the nut, and resulting in uneven distribution, between the turns of the shaft thread, of the loads acting on the screw.

It is an object of the present invention to provide a ball screw designed to eliminate the aforementioned drawbacks, and which is cheap and easy to produce.

According to the present invention, there is provided a ball screw as claimed in Claim 1.

A non-limiting embodiment of the present invention will be described by way of example with reference to the accompanying drawings, in which:
Figure 1 shows a schematic view in perspective of a preferred embodiment of the ball screw according to the present invention;
Figure 2 shows a schematic side view, with parts removed for clarity, of a longitudinal section of a detail in Figure 1;
Figure 3 shows a view in perspective of the longitudinal section in Figure 2.

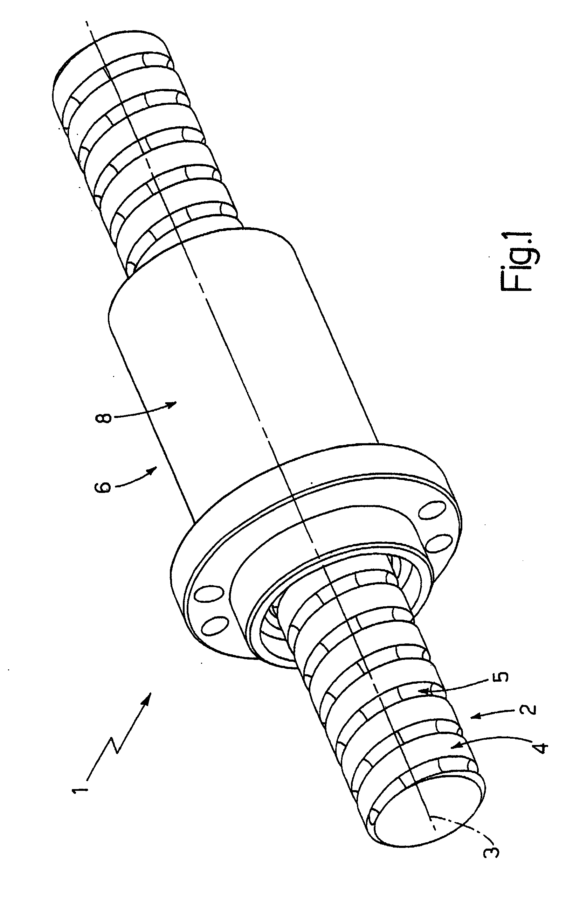

Number 1 in Figure 1 indicates as a whole a ball screw comprising a substantially cylindrical shaft 2, which has a given longitudinal axis 3, is bounded externally by a cylindrical surface 4 coaxial with axis 3, and has a single thread 5 formed on surface 4 and coiling about axis 3.

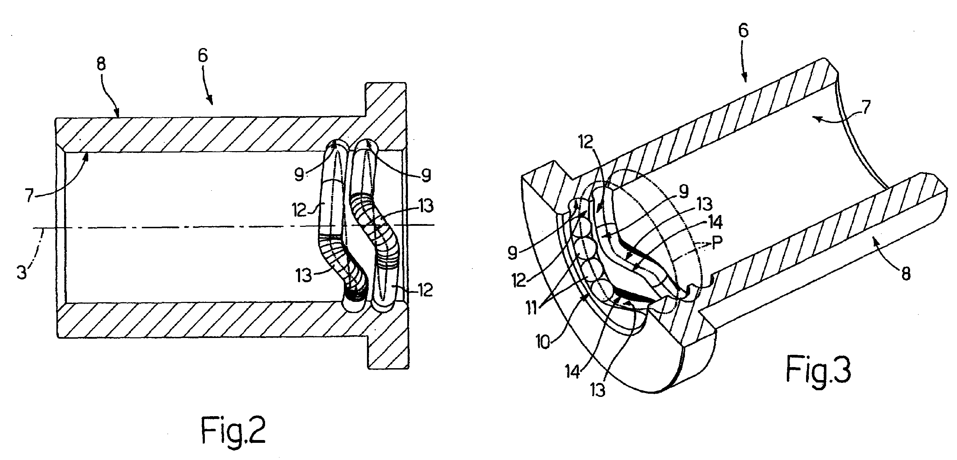

As shown in Figures 1 and 2, screw 1 also comprises a tubular nut 6, which is formed in one piece, is fitted to shaft 2, is bounded internally by a cylindrical surface 7 coaxial with axis 3, and is bounded externally by a continuous cylindrical surface 8.

Nut 6 has a number of tracks 9, which open outwards at surface 7, are arranged successively along axis 3, extend along respective endless paths P about axis 3, and are each engaged by a respective train 10 of balls 11.

Each track 9 extends substantially 360° about axis 3, is formed entirely and directly in and in one piece with nut 6 by machining, e.g. angular milling, and may also be ground.

Track 9 comprises a substantially semicylindrical first portion 12, which coils about axis 3, is oriented substantially the same way as thread 5, and is of a given depth measured crosswise to relative path P. Track 9 also comprises a second portion 13, which extends between the free ends of portion 12, is oriented to divert balls 11 from one free end to the other of relative portion 12, is bounded laterally by two retaining walls 14, and is of a depth, measured crosswise to relative path P, greater than the depth of relative portion 12 to allow relative balls 11 to release thread 5.

In connection with the above, it should be pointed out that, in the example shown, tracks 9 are so arranged that relative portions 13 are slightly offset circumferentially with respect to each other about axis 3.

Since tracks 9 are formed directly in and in one piece with nut 6:
relative portions 13, and therefore relative retaining walls 14, are of the same hardness as relative portions 12, and therefore relatively hard and able to withstand the impact of relatively large balls 11;
nut 6, having no holes formed radially through it, has a relatively high degree of rigidity and structural resistance; and
the loads on screw 1 are distributed relatively evenly between the turns of the thread of shaft 2.

## Claims

1. A ball screw with at least a single thread, comprising a shaft (2) having a given longitudinal axis (3) and an external thread (5); a nut (6) formed in one piece, fitted coaxially with said shaft (2), and bounded by a substantially cylindrical inner surface (7), the nut (6) having at least one track (9) opening outwards at said inner surface (7) and extending along an endless path (P) about said axis (3), the track (9) comprising a first portion (12) oriented the same way as said external thread (5) and having a first depth measured crosswise to said path (P), and a second portion (13) having a second depth, also measured crosswise to said path (P), greater than said first depth; and a train (10) of balls (11) engaging said track (9); **characterized in that** the track (9) is formed entirely and directly on the nut (6) and in one piece with the nut (6).

2. A screw as claimed in Claim 1, wherein the nut (6) has a continuous outer surface (8).

3. A screw as claimed in Claim 1 or 2, wherein said path (P) extends substantially 360° about said axis (3).

4. A screw as claimed in any one of the foregoing Claims, and comprising a number of said tracks (9) arranged in succession along said axis (3); the tracks (9) being so arranged that the relative said second portions (13) are offset circumferentially with respect to each other about the axis (3).
